Europäisches Patentamt

European Patent Office

Office européen des brevets

(11) Publication number: **0 152 128**
**B1**

## (12) EUROPEAN PATENT SPECIFICATION

(45) Date of publication of patent specification: 05.10.88

(51) Int. Cl.⁴: **G 11 B 23/087**

(21) Application number: **85200057.9**

(22) Date of filing: **21.01.85**

(54) Magnetic-tape cassette.

(30) Priority: **25.01.84 NL 8400226**

(43) Date of publication of application:
**21.08.85 Bulletin 85/34**

(45) Publication of the grant of the patent:
**05.10.88 Bulletin 88/40**

(84) Designated Contracting States:
**DE FR GB IT**

(56) References cited:
**FR-A-2 508 223**
**GB-A-2 020 630**
**US-A-4 302 787**

**PATENTS ABSTRACTS OF JAPAN, vol. 5, no.
64 (P-59)736r, 30th April 1981, page 159P59; &
JP - A - 56 16975 (MATSUSHITA DENKI
SANGYO K.K.) 18-02-1982**

**PATENTS ABSTRACTS OF JAPAN, vol. 7, no.
23 (P-171)1168r, 29th January 1983, page
115P171; & JP - A - 57 176 574 (SONY K.K.)
29-10-1982**

(73) Proprietor: **N.V. Philips' Gloeilampenfabrieken
Groenewoudseweg 1
NL-5621 BA Eindhoven (NL)**

(72) Inventor: **Beyersbergen- van Henegouwen,
Cornelis Martin
c/o INT. OCTROOIBUREAU B.V. Prof. Holstlaan 6
NL-5656 AA Eindhoven (NL)**
Inventor: **van de Kerkhof, Franciscus Wilhelmus
c/o INT. OCTROOIBUREAU B.V. Prof. Holstlaan 6
NL-5656 AA Eindhoven (NL)**
Inventor: **Koken, Karel Gerardus Maria
c/o INT. OCTROOIBUREAU B.V. Prof. Holstlaan 6
NL-5656 AA Eindhoven (NL)**
Inventor: **Olierook, John Cornelius Joseph
c/o INT. OCTROOIBUREAU B.V. Prof. Holstlaan 6
NL-5656 AA Eindhoven (NL)**

(74) Representative: **Smit, Frederik Jan et al
INTERNATIONAAL OCTROOIBUREAU B.V. Prof.
Holstlaan 6
NL-5656 AA Eindhoven (NL)**

EP 0 152 128 B1

Courier Press, Leamington Spa, England.

## Description

The invention relates to a magnetic-tape cassette having a housing which comprises first and second substantially parallel major walls which each have two openings for the passage of drive spindles of a magnetic-tape-cassette apparatus, two substantially parallel side walls, a rear wall, a front wall along which a part of the magnetic tape extends, and a front cover which comprises a major portion which when the cover is in the closed position covers the part of the magnetic tape which extends along the front wall, and cover flanges which are situated one on each side of the major portion adjacent the side walls of the housing and which are pivotable about coaxial pivot pins on the adjacent side walls, the axes of the pivot pins forming a pivotal axis which is situated in a plane of symmetry situated at equal distances from the two major walls of the housing, about which pivotal axis the front cover is pivotable from the closed position to a first open position in which the major portion is situated near the first major wall or a second open position in which said major portion is situated near the second major wall, each of the side walls being formed with a semicircular slot which is concentric with the pivotal axis and which is situated symmetrically relative to said plane of symmetry and in which engages a journal pin which is connected to the adjacent cover flange and on which a spring acts to keep the front cover in the closed position or to pivot it towards the closed position.

A magnetic-tape cassette of the above type is known from United States Patent Specification 4,302,787. The front cover of this known casseette can be pivoted upwards and downwards against the pressure of the respective limbs of a hairpin spring. This spring ensures that the cover can pivot back automatically to the closed position. Since there is not provided a latching mechanism for the closed position, inadvertent opening of the cover is possible for example if the cassette is held by the front cover, so that after opening the part of the magnetic tape which extends across the front openings in the front wall of the cassette housing is exposed and may be damaged and/or soiled. In order to allow the spring to pivot the cover back correctly from the respective open position to the closed position, in the known cassette there must be some clearance between the front wall and the major portion of the cover, as a result of which the front openings in the front wall cannot be closed in an optimum manner, for example, to preclude the penetration of dust.

It is the object of the invention to ensure that the front openings in the front wall of such a magnetic tape cassette are closed correctly in the closed position of the front cover and by providing latching means for the front cover to prevent the cover from being opened inadvertently.

To this end the invention is characterized in that each cover flange is formed with a straight slot in which the pivot pin on the adjacent side wall engages and the longitudinal axis of which is disposed in said plane of symmetry in the closed position of the front cover, the slot in each side wall being situated at the rear side of the associated pivot pin and having a recess in its wall which is remote from the pivot pin, the recess being situated on said plane of symmetry and the journal pin on the adjacent cover flange being urged into said recess by the associated spring in the closed position of the front cover.

In this way the front cover can be latched in the closed position because in this position the pins on the cover flanges are urged into the recesses in the side walls of the cassette housing as a result of the forces exerted by the springs. The change in position of the slot in each cover flange upon closure of the cover results in the cover being moved towards the front wall of the housing and effectively closing the front openings therein at the end of the closing movement of the cover. The cover swings upon only after a specific force has been exerted on the cover. In this way inadvertent opening of the cover is practically excluded. Moreover, when the cover is swung open the major portion of the cover is moved slightly away from the front wall because the journal pins on the cover flanges are moved out of the recesses, so that the clearance between the major portion of the cover and the front wall is such that the pivotal movement is not impeded by the front wall. A further advantage is that for latching the front cover a simple construction comprising a few parts is employed, so that this construction is particularly suitable for use in mass-produced magnetic-tape cassettes.

A preferred embodiment of the invention is characterized in that the wall of each recess has a circularly cylindrical curvature with a radius which substantially corresponds to the radius of the journal pins on the cover flanges. This ensures that after closure of the front cover the journal pins are positioned firmly and accurately in the corresponding recess portion. This results in a correct latching of the front cover and it guarantees that when the cover is closed it always occupies the correct position relative to the front of the housing.

An embodiment of the invention will now be described in more detail, by way of example, with reference to the drawings. In the drawings:

Figure 1 is a perspective view of a magnetic-tape cassette in accordance with the invention;

Figure 2 is a front view of the cassette shown in Figure 1, the front cover being shown in an open position;

Figure 3 is an enlarged-scale side view of part of the left-hand side wall of the cassette housing and the adjacent cover flange, looking in the direction or the arrow III in Figure 1;

Figure 4 is a sectional view taken on the lines IV—IV in Figure 3.

Figure 5 is an enlarged-scale side view looking in the direction of the arrow V in Figure 2;

Figure 6 is a side view similar to Figure 5, but showing the front cover in another open position.

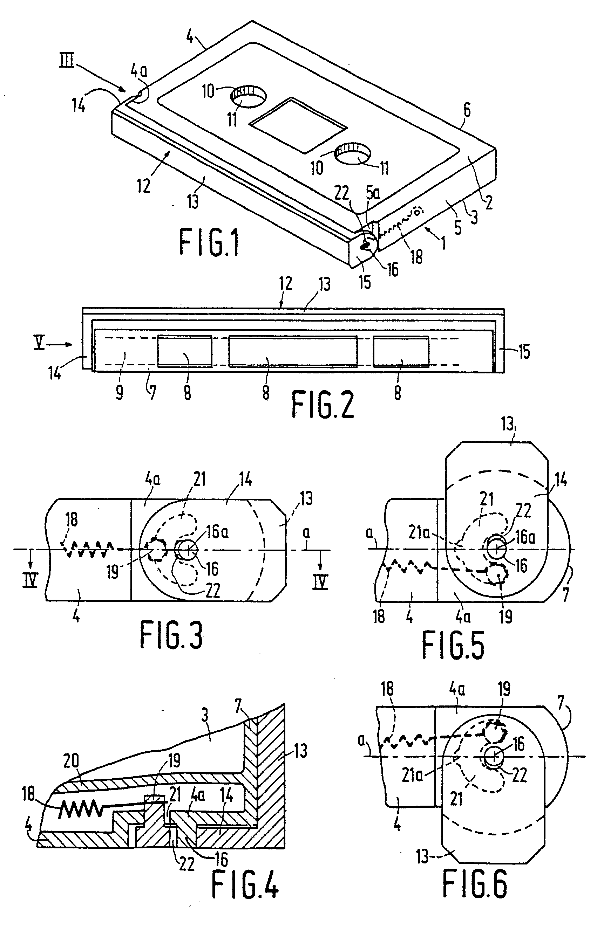

As shown in Figures 1 and 2, the magnetic-tape cassette has a housing comprising two substantially parallel rectangular major walls 2 and 3. The housing 1 further comprises two substantially parallel rectangular side walls 4 and 5, a rear wall 6, and a front wall 7 which extends parallel to this rear wall. The front wall 7 is formed with three front openings 8, a part of a magnetic tape 9 contained in the cassette extending tautly behind the front openings 8 along the front wall 7 to cooperate with parts of a magnetic-tape-cassette apparatus, not shown. These parts are magnetic heads, a pressure roller and a capstan. In a manner not shown the magnetic tape 9 is wound on two hubs 10 which are mounted for rotation between the two major walls 2 and 3. For driving the hubs 10 two circular openings 11 are formed both in the major wall 2 and in the major wall 3, so that the cassette in accordance with the invention is of the so-called reversible type. Drive spindles of the magnetic-tape-cassette apparatus are engageable with the openings 11. This construction of the cassette in accordance of the invention may be compared with the customary construction of the so-called Compact Cassette. Further the cassette in accordance with the invention comprises a front cover 12, having a major portion 13 which, as is shown in Figure 4, is positioned against the front wall 7 in the closed position of the cover and thereby covers the taut part of the magnetic tape 9. On each side of the major portion 13 the cover 12 comprises cover flanges 14 and 15 which extend along portions of the side walls 4 and 5 respectively and which are pivotally connected to the side walls by means of pivot pins 15 on these side walls. The common axis 16a of the pivot pins 16 constitutes the pivotal axis of the front cover, which axis extends perpendicularly to the side walls 4 and 5 and is disposed in a plane of symmetry $a$ situated at equal distances from the major walls 2 and 3. By pivoting the front cover about the pivotal axis 16a the cover can be moved to a first open position as shown in Figures 2 and 5, or a second open position as shown in Figure 6.

A tension spring 18 is connected to each side wall 4 and 5 respectively, which spring extends with its longitudinal axis parallel to the major walls 2 and 3 in the closed position of the cover 12 and which is also connected to a journal pin 19 on the inner sides of the side walls 4 and 5 respectively. A wall 20 separates the spring 18 from the remainder of the interior of the cassette; preferably, the wall 20 extends up to the front wall 7. Each journal pin 19 engages a semicircular slot 21 which is concentric with the pivotal axis 16a of the cover 12 and which is formed in a slightly off-set portion 4a or 5a of the respective side wall 4 or 5. Each slot 21 is disposed symmetrically relative to the plane of symmetry $a$ and is situated at the rear side of the pivot pin 16 on the respective side wall. At the side which is remote from the pivot pin 16 the slot 21 has a central recess 21a, which recess also is disposed symmetrically relative to the plane of symmetry $a$. In the closed position of the cover 12 the springs 18 pulls the journal pins 19 into the recesses 21a. In this position the cover 12 is pulled towards the rear wall 6 by the two springs 18 near the side walls 4 and 5 respectively, the inner side of the major portion 13 being positioned against the front wall 7. In this respect it is important that the pivot pins 16 each engage a straight slot 22, the longitudinal axis of this slot, as is shown in Figure 3, being disposed in the plane of symmetry $a$ when the cover 12 is in the closed position. Thus, during the movement of the journal pins 19 in the recesses 21a the flanges 14 and 15 can slide on the pivot pins 16. The length of the slots 22 corresponds to the width of the slots 21 plus the depth of the recesses 21a, measured in the plane of symmetry $a$ in Figure 3 so that the journal pins 19 can slide into the recesses 21a and assume a stable position in these recesses, while substantially at the same time the pivot pins 16 abut the front end walls of the slots 22, and the journal pins 19 can leave the recesses 21a by a movement of the slots 22 over the pins 16.

As stated in the foregoing, the springs 18 pull the journal pins 19 into the recesses 21a in the closed position of the cover 12. Since each recess 21a preferably has a circularly cylindrical curvature with a radius which substantially corresponds to that of the journal pins 19, the journal pins occupy stable positions in the recesses, so that inadvertent opening of the cover 12 is practically precluded. Thus, in the closed position the cover 12 is latched and the part of magnetic tape 9 situated behind the front wall 7 as well as the other parts of the tape are protected effectively against damage and the penetration of dirt. The cover 12 can be swung open to the first (Figure 5) and the second (Figure 6) open position only in that at least a specific minimum force is exerted on the cover 12, which force is directed perpendicularly to the major walls 2 and 3. Swinging open is effected when the cassette is inserted into the magnetic-tape-cassette apparatus, for example by means of a cover-opening means provided in the apparatus. During opening the slot 22 moves until its left-hand end, viewed in Figure 3, abuts with the pivot pin 16. This movement is effected because almost simultaneously the journal pin 19 moves from the recess 21a in the slot 21 in a downward or upward direction, for example owing to the upwardly or downwardly directed force exerted by the cover-opening means, which is effected against the force of the spring 18. This has the advantage that the movement of the slots 22 results in the cover 12 being moved slightly to the right, viewed in Figure 3, so that the inner side of the major portion 13 moves away from the front wall 7, enabling the cover to be swung open without being impeded by the front wall. In the first or the second open position each journal pin 19 is urged against the relevant end of the slot 21 by the cover opening means, and is kept in this position as long as the cover must be open. In this position the major portion 13 extends substantially parallel to the major walls above the front portion of the major wall 2 or beneath the front portion of the major wall 3, so that parts of the apparatus can move freely through the front openings 8 to cooperate with the magnetic tape 9.

For the cassette in accordance with the invention it is essential that as soon as the cover-opening means is moved away from the cover 12 this cover moves back to the closed position both from the first and from the second open position under the influence of the springs 18 without any external action, in that the journal pins 19 are again pulled into the recesses 21a, the cover 12 is automatically locked again and is pulled against the front wall 7. This latching of the cover 12 and the correct sealing of the front openings 8 in the closed position of the cover render the cassette in accordance with the invention particularly suitable for the recording and/or the reproduction of digital information because a cassette housing which can be closed effectively is desirable for this purpose.

## Claims

1. A magnetic-tape cassette having a housing which comprises first and second substantially parallel major walls (2, 3) which each have two openings (11) for the passage of drive spindles of a magnetic-tape-cassette apparatus, two substantially parallel side walls (4, 5), a rear wall, (6) a front wall (7) along which a part of the magnetic tape (9) extends, and a front cover (12) which comprises a major portion (13) which, when the cover (12) is in the closed position, covers the part of the magnetic tape (9) which extends along the front wall (7), and cover flanges (14, 15) which are situated one on each side of the major portion (13) adjacent the side walls (4, 5) of the housing and which are pivotable about coaxial pivot pins (16) on the adjacent side walls (4, 5), the axes of the pivot pins (16) forming a pivotal axis (16a) which is situated in a plane of symmetry (a) situated at equal distances from the two major walls (2, 3) of the housing, about which pivotal axis (16a) the front cover (12) is pivotable from the closed position to a first open position in which the major portion (13) is situated near the first major wall (2) or a second open position in which said major portion (13) is situated near the second major wall (3), each of the side walls (4, 5) being formed with a semicircular slot (21) which is concentric with the pivotal axis (16a) and which is situated symmetrically relative to said plane of symmetry (a) and in which engages a journal pin (19) which is connected to the adjacent cover flange (14, 15) and in which a spring (18) acts to keep the front cover (12) in the closed position or to pivot it towards the closed position, characterized in that each cover flange (14, 15) is formed with a straight slot (22) in which the pivot pin (16) on the adjacent side wall (4, 5) engages and the longitudinal axis of which is disposed in said plane of symmetry (a) in the closed position of the front cover, (12) the slot (21) in each side wall (4, 5) being situated at the rear side of the associated pivot pin (16) and having a recess (21a) in its wall (21a) which is remote from the pivot pin, (16) the recess (21a) being situated on said plane of symmetry (a) and the journal pin (19) on the adjacent cover flange (14, 15) being urged into said recess by the associated spring (18) in the closed position of the front cover (12).

2. A magnetic tape cassette as claimed in Claim 1, characterized in that the wall of each recess (21a) has a circularly cylindrical curvature with a radius which substantially corresponds to the radius of the journal pins (19) on the cover flanges (14, 15).

## Patentansprüche

1. Magnetbandkassette mit einem Gehäuse, das erste und zweite im wesentlichen sich parallel zueinander erstreckende Hauptwände (2, 3) aufweist, die je zwei Öffnungen (11) aufweisen zum Hindurchlassen von Antriebsspindeln eines Magnetbandkassettengerätes, weiterhin zwei im wesentlichen sich parallel zueinander erstreckende Seitenwände (4, 5), eine Rückwand (6), eine Vorderwand (7), an der entlang sich ein Teil des Magnetbandes (9) erstreckt sowie eine Frontklappe (12), die einen Hauptteil (13) aufweist, der, wenn die Klappe (12) sich in der geschlossenen Lage befindet, denjenigen Teil des Magnetbandes (9) bedeckt, der sich längs der Vorderwand (7) erstreckt und Kleppenflansche (14, 15) aufweist, die an je einer Seite des Hauptteils (13) grenzend an die Seitenwände (4, 5) des Gehäuses liegen und die um koaxiale Schwenkstifte (16) an den benachbarten Seitenwänden (4, 5) schwenkbar sind, wobei die Achsen der Schwenkstifte (16) eine Schwenkachse (16a) bilden, die in einer Symmetrieebene (a) liegt, die in gleiche Abständen von den zwei Hauptwänden (2, 3) des Gehäuses liegt, wobei um diese Schwenkachse (16a) die Frontklappe (12) aus einer geschlossenen Lage in eine erste offene Lage schwenkbar ist, in der der Hauptteil (13) nahe der ersten Hauptwand (2) liegt, oder in eine zweite offene Lage, in der der genannte Hauptteil (13) nahe der zweiten Hauptwand (3) liegt, wobei jede der Seitenwände (4, 5) mit einem halbkreisförmigen Schlitz (21) versehen ist, der sich konzentrisch zu der Schwenkachse (16a) erstreckt und der symmetrisch zu der genannten Symmetrieebene (a) liegt und mit einem Zapfen (19) zusammenarbeitet, der mit dem benachbarten Klappenflansch (14, 15) verbunden ist und auf der eine Feder (18) einwirkt um die Frontklappe (12) in der geschlossenen Lage zu halten oder um die Klappe in die geschlossene Lage zu schwenken, dadurch gekennzeichnet, dass jeder Klappenflansch (14, 15) mit einem geraden Schlitz (22) versehen ist, mit dem der Schwenkstift (16) auf der benachbarten Seitenwand (4, 5) zusammenarbeitet und wobei die Längsachse desselben in der geschlossenen Lage der Frontklappe (12) in der genannten Symmetrieebene (a) liegt, wobei der Schlitz (21) in jeder Seitenwand (4, 5) auf der Rückseite des zugeordneten Schwenkstiftes (16) liegt und in der in einem Abstand von dem Schwenkstift (16) liegenden Wand eine Ausnehmung (21a) aufweist, wobei diese Ausnehmung in der genannten Symmetrieebene (a) liegt und wobei in der geschlossen Lage der Frontklappe (12) der Zapfen (19) an dem benachbarten Klappenflansch (14, 15) durch die zugeordnete Feder (18) in die genannte Ausnehmung gedrückt wird.

2. Magnetbandkassette nach Anspruch 1, dadurch gekennzeichnet, dass die Wand jeder Ausnehmung (21a) eine kreiszylindrische Krümmung aufweist mit einem Radius, der im wesentlichen dem Radius der Schwenkstifte (19) auf dem Klappenflanschen (14, 15) entspricht.

**Revendications**

1. Cassette de bande magnétique comportant un boîtier qui comprend une première et une seconde paroi principale en substance parallèles (2, 3) qui présentent chacune deux ouvertures (11) pour le passage des axes d'entraînement d'un appareil à cassette de bande magnétique, deux parois latérales en substance parallèles (4, 5), une paroi postérieure (6), une paroi antérieure (7) le long de laquelle s'étend une partie de la bande magnétique (9), et un volet antérieur (12) qui comprend une partie principale (13) qui, lorsque le volet (12) se trouve dans sa position de fermeture, couvre la partie de la bande magnétique (9) qui s'étend le long de la paroi antérieure (7), et des joues de volet (14, 15) qui sont situées, respectivement, de part et d'autre de la partie principale (13) près des parois latérales (4, 5) du boîtier et qui peuvent pivoter autour de pivots coaxiaux (16) sur les parois latérales adjacentes (4, 5), les axes des pivots (16) formant un axe de pivotement (16a) qui est disposé dans un plan de symétrie (a) situé à égales distances des deux parois principales (2, 3) du boîtier, le volet antérieur (12) pouvant pivoter autour de cet axe de pivotement (16a) à partir de la position de fermeture vers une première position d'ouverture dans laquelle la partie principale (13) est située près de la première paroi principale (2), ou une seconde position d'ouverture dans laquelle la partie principale (13) est située près de la seconde paroi principale (3), chacune des parois latérales (4, 5) présentant une boutonnière semi-circulaire (21) qui est concentrique à l'axe de pivotement (16a), qui est située symétriquement par rapport au plan de symétrie (a) et qui reçoit un téton (19) relié à la joue de volet adjacente (14, 15) et sur lequel un ressort (18) agit pour maintenir le volet antérieur (12) dans la position de fermeture ou pour le faire pivoter vers la position de fermeture, caractérisée en ce que chaque joue (14, 15) du volet présente une boutonnière droite (22) dans laquelle le pivot (16) sur la paroi latérale adjacente (4, 5) s'engage et dont l'axe longitudinal est disposé dans le plan de symétrie (a) dans la position de fermeture du volet antérieur (12), la boutonnière (21) dans chaque paroi latérale (4, 5) étant située à l'arrière du pivot associé (16) et présentant une encoche (21a) dans sa paroi qui est éloignée du pivot (16), l'encoche étant située sur le plan de symétrie (a) et le téton (19) sur la joue de volet adjacente (14, 15) étant sollicité dans l'encoche par le ressort (18) associé dans la position de fermeture du volet antérieur (12).

2. Cassette de bande magnétique suivant la revendication 1, caractérisée en ce que la paroi de chaque encoche (21a) présente une courbure cylindrique circulaire dont le rayon correspond en substance au rayon des tétons (19) prévus sur les joues (14, 15) du volet.

FIG.1

FIG.2

FIG.3

FIG.4

FIG.5

FIG.6